# DEMANDE DE BREVET EUROPEEN

(11) **EP 4 258 143 A1**
(43) Date de publication de la demande: **11.10.2023**
(21) Numéro de dépôt: 23165264.5
(22) Date de dépôt: 29.03.2023
(51) Int. Cl.: G06F 21/55, H04L 9/40, H04W 12/12

(54) **PROTECTION DES CODES SENSIBLES**

(30) Priorité: 05.04.2022 FR 2203094
(71) Demandeur: STMicroelectronics (Grand Ouest) SAS, 72100 Le Mans (FR)
(72) Inventeur: RUELLE, Frederic, 72220 MARIGNE-LAILLE (FR)
(74) Mandataire: Cabinet Beaumont

(57) **Abrégé**

La présente description concerne un procédé comprenant :
- la détection (203) par un circuit de surveillance, lors de l'exécution par un processeur d'un code stocké dans une mémoire d'un dispositif, d'une adresse de lecture dans la mémoire, la détection étant faite par l'intermédiaire d'un bus relié à la mémoire ;
- la comparaison (204) par le circuit de surveillance de l'adresse avec une ou plusieurs premières adresses ;
- si l'adresse est comprise dans l'une ou plusieurs premières adresses, la commande, par le circuit de surveillance, d'un circuit de commande d'horloge pour empêcher l'activation d'un ou plusieurs circuits périphériques.

## Description

### Domaine technique

La présente description concerne le domaine des procédés et dispositifs pour la sécurité de circuits électroniques, et en particulier un dispositif et un procédé permettant de protéger des codes.

### Technique antérieure

Lorsqu'un dispositif électronique est en fonctionnement, des codes, tels que des codes de démarrage, des codes logiciels ou des codes micrologiciels, sont exécutés par un processeur. Des données, telles que des clefs de chiffrement transitent alors sur un bus de données du dispositif, et des instructions de codes transitent alors sur un bus d'instructions du dispositif.

Bien que des solutions existent pour rendre des données ou des codes inaccessibles, il serait souhaitable de protéger d'avantage l'accès à ces codes et aux données sensibles.

### Résumé de l'invention

Il existe un besoin d'améliorer la sécurisation des procédures de démarrage, et plus généralement des codes, y compris des codes applicatifs, des dispositifs de traitement.

Un mode de réalisation pallie tout ou partie des inconvénients des dispositifs de traitement connus.

Un mode de réalisation prévoit un procédé comprenant :
- la détection par un circuit de surveillance, lors de l'exécution par un processeur d'un code stocké dans une mémoire d'un dispositif, d'une adresse de lecture dans la mémoire, la détection étant faite par l'intermédiaire d'un bus relié à la mémoire ;
- la comparaison par le circuit de surveillance de l'adresse avec une ou plusieurs premières adresses ;
- si l'adresse est comprise dans l'une ou plusieurs premières adresses, la commande, par le circuit de surveillance, d'un circuit de commande d'horloge pour empêcher l'activation d'un ou plusieurs circuits périphériques.

Selon un mode de réalisation, la commande comprend le verrouillage d'une configuration courante du circuit de commande d'horloge, cette configuration courante imposant un état de désactivation à un ou plusieurs des circuits périphériques.

Selon un mode de réalisation, la commande comprend la désactivation d'au moins un des circuits périphériques.

Selon un mode de réalisation, le circuit de commande d'horloge est configuré pour désactiver et/ou activer des signaux d'horloges du ou des circuits périphériques du dispositif afin d'effectuer la désactivation et/ou l'activation du ou des périphériques, les signaux d'horloge étant générés par un circuit de génération d'horloge.

Selon un mode de réalisation, si l'adresse fait partie de l'une ou plusieurs premières adresses, le circuit de surveillance bascule l'état d'un bit du circuit de commande d'horloge vers un premier état entraînant le verrouillage du circuit de commande d'horloge.

Selon un mode de réalisation, lorsque le circuit de commande d'horloge est verrouillé, des signaux d'horloge générés par le circuit de génération d'horloge ne peuvent plus être modifiés par le circuit de commande.

Selon un mode de réalisation, le bit du circuit de commande d'horloge est un bit de type programmable une seule fois.

Selon un mode de réalisation, le procédé comprend en outre la comparaison de l'adresse avec une ou plusieurs deuxièmes adresses, dans lequel, si l'adresse fait partie de l'une ou plusieurs deuxièmes adresses, le circuit de surveillance bascule l'état du bit du circuit de commande d'horloge vers un deuxième état entraînant le déverrouillage du circuit de commande d'horloge.

Selon un mode de réalisation, lorsque le circuit de commande d'horloge est déverrouillé, des signaux d'horloge générés par le circuit de génération d'horloge ne peuvent plus être modifiés par le circuit de commande.

Selon un mode de réalisation, si l'adresse ne fait pas partie de l'une ou plusieurs premières ou deuxièmes adresses, le circuit de surveillance est configuré pour ne pas modifier l'état du bit du circuit de commande d'horloge.

Selon un mode de réalisation, le procédé comprend en outre, avant la comparaison de l'adresse avec l'une ou plusieurs premières adresses, le stockage de l'une ou plusieurs premières adresses dans une mémoire non-volatile du dispositif.

Selon un mode de réalisation, le code est un code de démarrage du processeur du dispositif.

Selon un mode de réalisation, l'une ou plusieurs premières adresses forment une ou plusieurs plages d'adresses.

Un mode de réalisation prévoit un dispositif comprenant un circuit de surveillance configuré pour détecter, lors de l'exécution par un processeur d'un code stocké dans une mémoire du dispositif, une adresse de lecture dans la mémoire, la détection s'effectuant par l'intermédiaire d'un bus relié à la mémoire, le circuit de surveillance étant en outre configuré pour comparer l'adresse avec une ou plusieurs premières adresses et, lorsque l'adresse fait partie de l'une ou plusieurs première adresses, pour commander un circuit de commande d'horloge afin d'empêcher l'activation d'un ou plusieurs circuits périphériques.

Selon un mode de réalisation, le circuit de commande d'horloge est configuré pour désactiver et/ou activer des signaux d'horloges du ou des circuits périphériques du dispositif afin d'effectuer la désactivation et/ou l'activation du ou des périphériques, les signaux d'horloge étant générés par un circuit de génération d'horloge.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, de façon très schématique et sous forme de blocs, un dispositif électronique selon un mode de réalisation de la présente description ;
la figure 2 est un organigramme représentant des opérations d'un procédé de démarrage sécurisé d'un dispositif électronique selon un exemple de réalisation de la présente description ; et
la figure 3 illustre plus en détail un bus selon un mode de réalisation de la présente description.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, la conception de dispositifs de traitement est bien connue de la personne du métier et certains éléments n'ont pas été détaillés dans la description qui suit.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

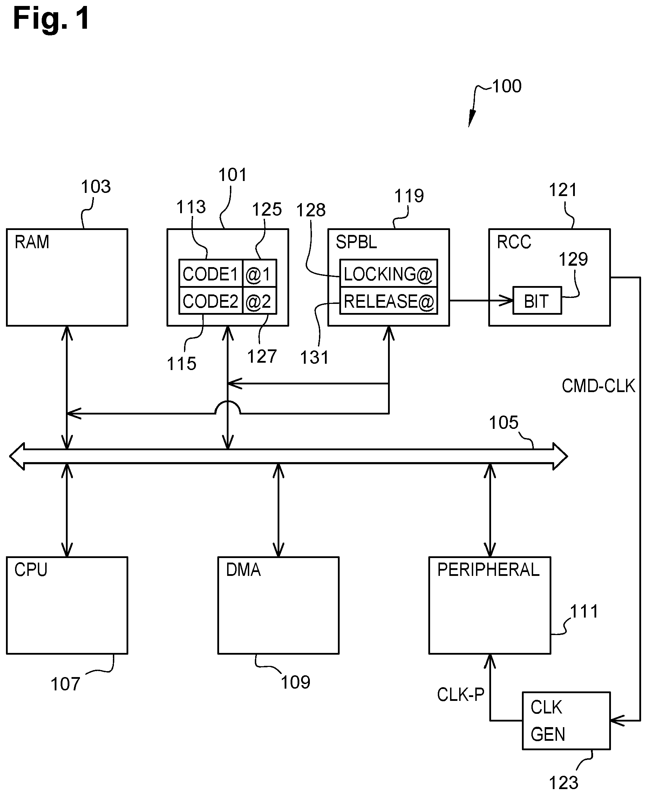

La figure 1 représente, de façon très schématique et sous forme de blocs, un dispositif électronique 100 selon un mode de réalisation de la présente description.

Le dispositif électronique 100 est par exemple un circuit intégré, tel qu'un système sur puce (en anglais « system on chip »), qui peut faire partie d'une carte à microcircuits, un matériel à usage informatique, etc. Le dispositif 100 comprend par exemple une architecture de type microcontrôleur ou de type microprocesseur.

Le dispositif 100 comprend par exemple une mémoire non volatile 101 (NV MEM). A titre d'exemple, la mémoire 101 est une mémoire non volatile de type FLASH. Le dispositif 100 comprend en outre une mémoire volatile 103 (RAM). La mémoire volatile 103 est par exemple une mémoire à accès aléatoire (en l'anglais « Random Access Memory »). Les mémoires 101 et 103 sont par exemple reliées, par l'intermédiaire d'un bus 105, à un processeur 107 (CPU), à un circuit d'accès à la mémoire 109 (DMA) (de l'anglais « Direct Memory Access ») ainsi qu'à un ou plusieurs circuits périphériques 111 (PERIPHERAL).

Bien qu'un exemple de dispositif 100 comprenant à la fois la mémoire non-volatile 101 et la mémoire volatile 103 est illustré, dans d'autres modes de réalisation uniquement l'une ou l'autre de ces mémoires pourrait être présente.

La mémoire 101 stocke par exemple des codes 113 et 115 (CODE1, CODE2), qui sont par exemple des codes de démarrage ou d'autres codes. Les codes 113 et 115 comprennent chacun une ou plusieurs instructions exécutables par le processeur 107. Le code 113 est par exemple sensible en termes de sécurité. Par exemple, le code 113 comprend, ou manipule, des données sensibles telles que des clefs secrètes, ou a des accès privilégiés à des données sensibles. Le code 115 n'est par exemple pas sensible en termes de sécurité.

Dans un autre exemple, les codes 113 et 115 sont stockés dans la mémoire volatile 103. C'est par exemple le cas lorsque le dispositif 100 est un dispositif dit « ROM-less » (dépourvu de mémoire non volatile).

Les circuits périphériques 111 peuvent présenter des risques de sécurité lorsqu'ils sont activés pendant l'exécution des codes sensibles, tel que le code 113. Par exemple, lorsque que le dispositif 100 réalise une procédure de démarrage sur la base du code 113, un attaquant peut avoir accès, via un des circuits périphériques 111, au bus 105 et par exemple injecter des codes malveillants dans le dispositif 100 ou récupérer des données ou codes sensibles en termes de confidentialité.

Le dispositif 100 comprend en outre un circuit de surveillance 119 (SBPL) relié à un circuit de commande d'horloge 121 (RCC) (de l'anglais « Reset Clock Circuit ») . Le circuit de surveillance 119 est implémenté de manière matérielle, par exemple à partir de portes logiques.

Le circuit de commande d'horloge 121 est configuré pour générer un signal CMD-CLK commandant un circuit de génération d'horloge 123. Le signal CMD-CLK permet au circuit de génération d'horloge 123 de générer des signaux d'horloge CLK-P cadençant un ou plusieurs circuits périphériques 111.

Selon un mode de réalisation, le circuit de commande d'horloge 121 est configurable et permet de choisir quels circuits périphériques parmi les circuits périphériques 111 sont actifs et lesquels sont inactifs. Autrement dit, le signal de commande CMD-CLK permet au circuit de génération d'horloge de transmettre les signaux d'horloge CLK-P aux circuits périphériques 111 sélectionnés comme étant actifs. Les circuits périphériques 111 sélectionnés comme étant inactif ne reçoivent pas de signaux d'horloges et ne sont alors pas cadencés, ce qui les rend inutilisables.

Le circuit de surveillance 119 est, par exemple, configuré pour détecter des adresses d'accès mémoire utilisées lors des accès à la mémoire 101. Par exemple, le circuit de surveillance 119 est configuré pour détecter un contexte dans lequel le processeur 107 est en train de fonctionner, le contexte étant défini par exemple par une ou plusieurs adresses, ou plages d'adresses des instructions qui sont récupérées par le processeur 107 pour exécution. Par exemple, le circuit 119 est couplé à une ou plusieurs lignes du bus 105 sur lesquelles des adresses d'accès mémoire sont transmises. Dans l'exemple illustré dans la figure 1, le code 113 est associé à des adresses 125 (@1) dans la mémoire 101, et le code 115 est associé à des adresses 127 (@2) dans la mémoire 101. Lorsque le processeur 107 envoie l'une parmi les adresses 125 sur le bus 105 avant ou pendant l'exécution du code 113, le circuit de surveillance 119 détecte le passage de cette adresse sur le bus 105, et conserve une copie de l'adresse. De même, lorsque le processeur 107 envoie l'une parmi les adresses 127 sur le bus 105 avant ou pendant l'exécution du code 115, le circuit de surveillance 119 détecte et conserve cette adresse.

Le circuit de surveillance 119 est en outre configuré pour comparer chaque adresse détectée à une ou plusieurs adresses 128 (LOCKING@) stockées par exemple dans une mémoire du circuit 119. Par exemple, les adresses 128 comprennent une liste d'adresses, ou une ou plusieurs plages d'adresses. Une plage d'adresse par exemple correspond à un contexte dans lequel le processeur 107 est en train de fonctionner et est caractérisé par une adresse seuil inférieure et une adresse seuil supérieure. Le circuit de surveillance 119 est alors configuré pour vérifier si une adresse détectée appartient au contexte, c'est à dire est supérieure à l'adresse seuil inférieure et inférieure à l'adresse seuil supérieure ou non.

Selon un mode de réalisation, lorsque l'adresse détectée fait partie de l'une ou plusieurs adresses 128, le circuit de surveillance 119 est configuré pour verrouiller le circuit de commande d'horloge 121. La configuration courante du circuit de commande d'horloge 121 est alors figée. Autrement dit, le signal de commande CMD-CLK ne peut pas être modifié et chaque circuit périphérique 111 reste alors dans l'état dans lequel il est. A titre d'alternative ou additionnelle, le circuit de surveillance 119 est configuré pour commander, par l'intermédiaire du circuit de commande d'horloge 121 et lorsque l'adresse détectée fait partie de l'une ou plusieurs adresses 128, la désactivation d'un ou plusieurs circuits périphériques 111. Par exemple lorsque l'adresse détectée fait partie de l'une ou plusieurs adresses 128, le circuit de surveillance 119 force le circuit de commande d'horloge 121 à désactiver tous les circuits périphériques 111 puis verrouille le circuit de commande d'horloge 121. La configuration courante, désactivant tous les circuits périphériques 111, est alors figée.

Le verrouillage du circuit de commande d'horloge 121, est basé par exemple sur l'état d'un bit 129 (BIT) mémorisé dans le circuit de commande d'horloge 121. Lorsque le bit 129 est dans un état de déverrouillage, par l'exemple l'état 0, le circuit 121 est par exemple déverrouillé et est configurable. Plus particulièrement le signal CMD-CLK de contrôle du circuit de génération d'horloge 123 peut être modifié. Lorsque le bit 129 est dans un état de verrouillage, par exemple l'état 1, le circuit de commande d'horloge 121 n'est plus configurable et le signal de commande CMD-CLK du circuit de génération d'horloge 123 ne peut pas être modifié. La configuration du circuit de commande d'horloge 121 est alors figée. Lorsque l'adresse détectée fait partie des adresses 128, le circuit de surveillance 119 est par exemple configuré pour imposer l'état de verrouillage au bit 129. Si ce bit était dans l'état de déverrouillage, l'état du bit 129 bascule, déclenchant le verrouillage du circuit de commande d'horloge 121. A titre d'alternative ou additionnelle, le basculement du bit 129 vers l'état de verrouillage impose de plus la désactivation de tous ou une partie des circuits périphériques 111, comme par exemple les périphériques augmentant la surface d'attaque du système tels que des périphériques de communication, par exemple des périphérique de type UART (de l'anglais « Universal Asynchronous Receiver-Transmitter »), SPI (de l'anglais « Serial Peripheral Interface »)) et/ou I2C (de l'anglais « Interface to Communicate ») et/ou des périphériques d'acquisition de données CAN (Convertisseur Analogique-Numérique) et/ou le circuit d'accès à la mémoire 109. A titre d'exemple, les circuits périphériques ne présentant pas d'interface avec l'extérieur du dispositif 100 ne sont pas concernés par la désactivation. Par exemple dans certains cas, les circuits périphériques 111 comprennent un horodateur qui n'est pas concerné par la désactivation, et continu à être cadencé par le circuit de génération d'horloge.

Selon un autre mode de réalisation, le choix des circuits périphériques 111 concernés par le verrouillage du circuit de commande d'horloge 121 est spécifié par l'intermédiaire d'un champ de bits et le basculement de l'état du bit 129 déclenche alors automatiquement le basculement de l'état des bits du champ de bits.

Selon un mode de réalisation, le circuit de surveillance 119 est en outre configuré pour comparer chaque adresse détectée à une ou plusieurs adresses 131 (RELEASE@) stockée par exemple dans la mémoire du circuit 119. Par exemple, les adresses 131 comprennent une liste d'adresses, ou une ou plusieurs plages d'adresses. Dans le cas où l'adresse détectée fait partie de l'une ou plusieurs adresses 131, et si le circuit de commande d'horloge 121 est verrouillé, le circuit de surveillance 119 est configuré pour basculer l'état du bit 129 vers l'état de déverrouillage. Le circuit de commande d'horloge 121 est alors déverrouillé et devient configurable. En particulier, le signal de commande CMD-CLK transmis au circuit de génération d'horloge 123 peut être modifié. De même, si le circuit de commande d'horloge 121 est déverrouillé et que l'adresse détectée ne fait pas partie de l'une ou plusieurs adresses 131, le circuit de surveillance 119 est alors configuré pour basculer l'état du bit 129 vers l'état de verrouillage, verrouillant ainsi le circuit de commande d'horloge 121.

Selon un mode de réalisation, la mémoire du circuit 119 mémorise l'une ou plusieurs adresses 128 ainsi que l'une ou plusieurs adresses 131. Lorsqu'une adresse lue ne fait pas partie des adresses 128 et 131, le circuit de surveillance 119 ne fait pas basculer l'état du bit 129. Le circuit de commande d'horloge 121 reste alors dans l'état dans lequel il était. Autrement dit, le circuit de commande d'horloge 121 est configurable si l'état du bit 129 est l'état de déverrouillage, et n'est pas configurable si l'état du bit 119 est l'état de verrouillage.

Bien entendu, uniquement l'une ou plusieurs adresses 128 peuvent être mémorisées dans la mémoire du circuit de surveillance 119, l'une ou plusieurs adresses 131 n'étant pas mémorisées, auquel cas le circuit 119 est par exemple configuré pour basculer l'état du bit 129 vers l'état de déverrouillage lorsque l'adresse lue ne fait pas partie de l'une ou plusieurs adresses 128. De même, uniquement l'une ou plusieurs adresses 131 peuvent être mémorisées dans la mémoire du circuit de surveillance 119, l'une ou plusieurs adresses 128 n'étant pas mémorisées, auquel cas le circuit 119 est par exemple configuré pour basculer l'état du bit 129 vers l'état de verrouillage lorsque l'adresse lue ne fait pas partie de l'une ou plusieurs adresses 131.

Selon un mode de réalisation, lorsque que le dispositif 100 s'allume et entame sa procédure de démarrage, le circuit de commande d'horloge 121 est configurable, le bit 129 étant dans l'état de déverrouillage par défaut. Dès que le processeur 107 déclenche une opération de récupération d'une instruction à une adresse dans la mémoire 101, par exemple une adresse faisant partie de l'une ou plusieurs adresses 128, l'état du bit 129 bascule, provoquant le verrouillage du circuit de commande d'horloge 121.

Selon un autre mode de réalisation, lorsque le dispositif 100 s'allume et entame sa procédure de démarrage, le circuit de commande d'horloge 121 est verrouillé et n'est pas configurable, le bit 129 étant dans l'état de verrouillage par défaut. A titre d'exemple, tous les circuits périphériques 111 sont désactivés et le signal de commande CMD-CLK ne peut pas être modifié. Le signal de commande CMD-CLK ne pourra alors être modifié que lorsque le processeur 107 déclenchera une opération de récupération d'une instruction à une adresse, faisant par exemple partie de l'une ou plusieurs adresses 131 dans la mémoire 101, provoquant le déverrouillage du circuit de commande d'horloge 121.

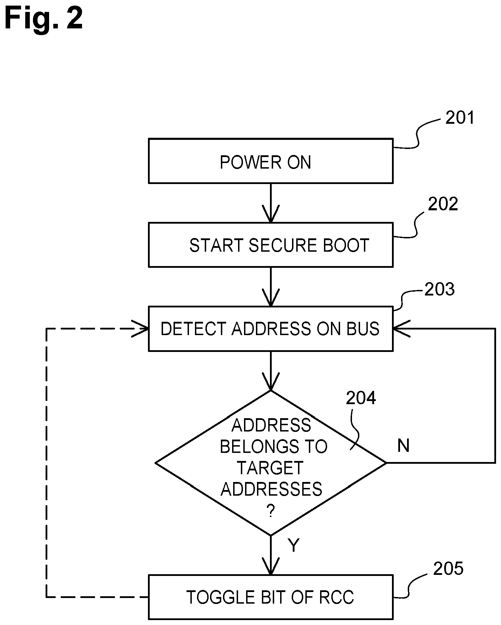

La figure 2 est un organigramme représentant des opérations d'un procédé de démarrage sécurisé du dispositif électronique 100 selon un exemple de réalisation de la présente description. L'exemple de la figure 2 est basé sur la présence des adresses 128 et 131 stockées dans la mémoire du circuit de surveillance 119. La personne du métier saura comment adapter le procédé pour le cas où seulement les adresses 128 ou seulement les adresses 131 sont présentes.

Dans une étape 201 (POWER ON), le dispositif électronique 100 est allumé, par exemple suite à une réinitialisation.

Le processus de démarrage sécurisé débute alors dans une étape 202 (START SECURE BOOT). Le processeur 107 récupère des instructions du code de démarrage stocké dans la mémoire 101, et les exécute afin de réaliser le démarrage. Les adresses des instructions du code de démarrage sont alors chargées dans le bus 105, le code de démarrage comprenant par exemple les codes 113 et 115.

Dans une étape 203 (DETECT ADDRESS ON BUS), le circuit de verrouillage 117 détecte le passage sur le bus 105, et par l'intermédiaire du circuit de surveillance 119, une adresse à laquelle est stockée une instruction du code de démarrage, l'adresse étant par exemple une parmi les adresses 125 à laquelle est stockée une instruction du code 113 ou une parmi les adresses 127 à laquelle est stockée une instruction du code 115.

Dans une étape 204 (ADDRESS BELONGS TO TARGET ADDRESSES ?), le circuit de surveillance 119, détermine si l'adresse détectée dans l'étape 203 fait partie à l'une ou plusieurs adresses 128 et/ou 131.

Lorsque l'adresse détectée ne fait pas partie de l'une ou plusieurs adresses 128 et/ou 131 (branche N), le procédé reprend à l'étape 203 et circuit de surveillance 119 est en attente de détection d'une nouvelle adresse transitant sur le bus 105.

Selon un mode de réalisation, lorsque l'adresse détectée ne fait pas partie de l'une ou plusieurs adresses 128 et/ou 131 (branche N), le code est exécuté et le, ou les, circuits périphériques utilisés sont désactivés une fois leur action effectuée.

Selon un autre mode de réalisation, les listes d'adresses 128 et 131 définissent des plages d'adresses, chaque plage étant par exemple définie par des adresses seuils de la plage, ce qui peut permettre de protéger le circuit dans le cas où un attaquant arrive à empêcher des adresses spécifiques de transiter sur le bus 105. Le dispositif 100 comprend par exemple une machine d'état (non illustrée en figure 1) configurée pour comparer les adresses transitant sur le bus 105 avec les plages d'adresses. Par exemple, les adresses 128 et 131 comportent chacune une unique adresse et la machine d'état est configurée pour basculer le bit 129 vers l'état de verrouillage lorsque l'adresse prélevée appartient à la plage d'adresses entre l'adresse 128 et l'adresse 131 et pour basculer le bit 129 vers l'état de déverrouillage lorsque le l'adresse détectée n'appartient pas à la plage d'adresses entre l'adresse 128 et l'adresse 131. Une fois que l'adresse de seuil supérieure a été lue, le circuit de commande d'horloge 121 est déverrouillé et l'activation d'un ou plusieurs circuits périphériques est possible.

Lorsque l'adresse détectée fait partie de l'une ou plusieurs adresses 128 et/ou 131 (branche Y), le procédé continue dans une étape 205 (TOGGLE BIT OF RCC) dans laquelle le circuit de surveillance 119 fait basculer l'état du bit 129 vers l'état de verrouillage si l'adresse détectée fait partie de l'une ou plusieurs adresses 128, ou vers l'état de déverrouillage si l'adresse détectée fait partie de l'une ou plusieurs adresses 131. Le basculement de l'état du bit 129 entraine alors le verrouillage, ou le déverrouillage du circuit de commande d'horloge 121 et fige ou défige ainsi la configuration courante des circuits périphériques 111.

Selon un mode de réalisation, le circuit de de commande d'horloge 121 est verrouillé au démarrage du dispositif 100 et est déverrouillé lorsque l'adresse détectée par le circuit de surveillance 119 fait partie de l'une ou plusieurs adresses 131. L'une ou plusieurs adresses 128 ne sont, dans ce mode de réalisation, pas mémorisées par le circuit de surveillance 119. Ainsi, une configuration initiale du circuit de commande d'horloge 121 est par exemple préprogrammée.

Selon un mode de réalisation, le bit 129 est de type programmable une seule fois tel que de type fusible. Dans ce cas, le procédé prend fin suite à la réalisation de l'étape 205 et le circuit de commande d'horloge 121 est verrouillé et par conséquent n'est plus configurable, au moins jusqu'à la prochaine réinitialisation du dispositif 100.

Lorsque le bit 129 est reprogrammable, et suite à l'étape 205, le procédé reprend à l'étape 203 dans laquelle le circuit de surveillance 119 est en attente de détection d'une nouvelle adresse transitant sur le bus 105.

Selon un mode de réalisation, uniquement lorsque l'une ou plusieurs adresses 128 ou uniquement lorsque l'une ou plusieurs adresses 131 sont mémorisées par le circuit 119, et lorsque l'adresse détectée ne fait pas partie de l'une ou plusieurs adresses mémorisée (branche N en sortie de l'étape 204), le procédé continue par exemple dans une réalisation de l'étape 205 dans laquelle l'état du bit est basculé vers l'état de déverrouillage ou vers l'état de verrouillage, selon l'une ou plusieurs adresses détectées.

A titre d'exemple, le bit 129 est programmable une seule fois et est par défaut dans l'état de déverrouillage. Le circuit de commande d'horloge 121 n'est pas verrouillé et est par conséquent configurable afin de déterminer quels sont les circuits périphériques 111 actifs ou inactifs. Par exemple, la réinitialisation du dispositif 100 se fait au moins en partie par l'intermédiaire d'un autre dispositif, relié au dispositif 100 via un des circuits périphériques 111. Dès que les circuits périphériques 111 ne sont plus utiles dans le processus de réinitialisation, le circuit de commande d'horloge 121 est par exemple configuré pour modifier le signal de commande CMD-CLK de sorte que le circuit de génération d'horloge 123 ne cadence plus les circuits périphériques 111 concernés. Le circuit de surveillance 119 est alors configuré pour basculer l'état du bit 129 et par conséquent désactiver les circuits périphériques 111 concernés jusqu'à la prochaine réinitialisation du dispositif 100.

Le procédé décrit en relation avec la figure 2 prend l'exemple du démarrage du dispositif 100, impliquant l'exécution des codes de démarrage. Dans d'autres modes de réalisation, le procédé, et en particuliers les étapes 203 à 205, pourrait être appliqué à d'autres procédures que le démarrage du dispositif 100, par exemple pendant l'exécution d'autres codes après le démarrage.

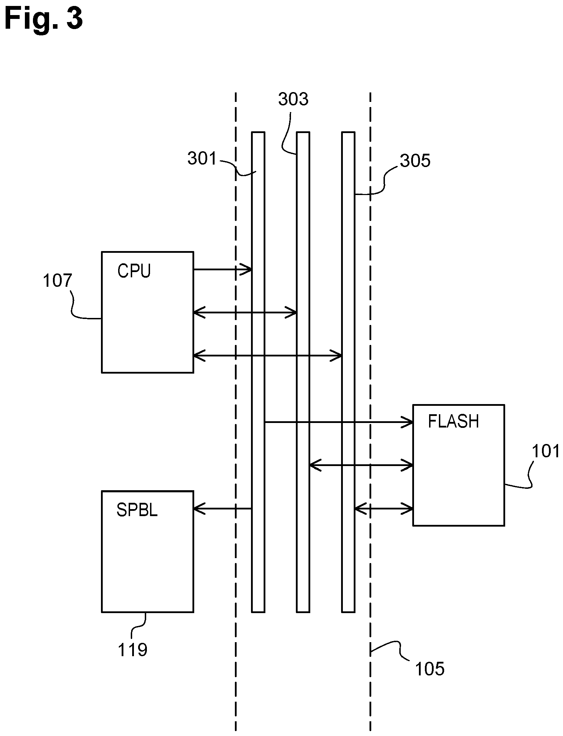

La figure 3 illustre plus en détail un mode de réalisation du bus 105 et de ses connexions avec la mémoire 101, le processeur 107 et le circuit de surveillance 119.

Le bus 105 comprend par exemple des bus dédiés aux communications entre le processeur 107 et la mémoire 101, ces bus comprenant par exemple un bus d'adressage 301, un bus de données 303 et un bus de commande 305.

Le processeur 107 est relié au bus d'adressage 301 afin d'y envoyer les adresses de lecture des cellules mémoires auxquelles il veut accéder. Par exemple, le processeur 107 envoie l'une parmi les adresses 125 sur le bus 301 afin d'accéder à une des instructions du code 113. Le bus de données 303 est configuré pour véhiculer les données, par exemple le code 113 stocké à l'adresse mémoire 125, entre la mémoire 101 et le processeur 107. Le bus de commande 305 est par exemple utilisé pour transmettre des signaux de commande en relation avec les accès à la mémoire 101, tels que des commandes d'écriture ou de lecture.

Le bus d'adressage 301 est en outre relié au circuit de surveillance 119. Le circuit de surveillance 119 est par exemple configuré pour détecter les signaux transmis sur le bus d'adressage 301. Par exemple, le bus d'adressage 301 est un bus configuré pour des transmissions en parallèle de n bits à la fois, sur n lignes correspondantes, où n est par exemple égal à 16, 32 ou 64, bien que d'autres valeurs soient possibles. Chaque transmission de n bits sur le bus 301 représente par exemple une adresse. Le circuit de surveillance 119 est configuré pour détecter le signal sur chacune des n lignes. Bien entendu, d'autres types de transmissions d'adresses sur le bus 301 sont possibles.

Les bus 303 et 305 ne sont, par exemple, pas reliés au circuit de surveillance 119.

Un avantage des modes de réalisation décrits est qu'ils apportent une certaine protection contre les attaques de type « glitch ». En effet, même si un attaquant attend le déverrouillage des circuits périphériques suite à l'exécution de codes de démarrage, et utilise à ce moment une attaque en glitch pour revenir à l'exécution de l'un des codes sensibles, le passage de l'adresse mémoire du code dans le bus d'adressage verrouillera automatiquement les circuits périphériques. Ainsi l'attaquant n'aura pas accès au code voulu à travers les circuits périphériques.

Un autre avantage des modes de réalisation décrits est que toutes les interfaces du dispositif 100 peuvent être désactivées en même temps, sans qu'il y ait besoin de surveiller des interfaces.

Un autre avantage des modes de réalisation décrits est que le verrouillage ou le déverrouillage du circuit de commande des horloges 121 permet d'ouvrir ou de fermer la possibilité de rendre actifs ou inactifs des périphériques au choix par l'intermédiaire des signaux d'horloges CLK-P.

Un autre avantage des modes de réalisation décrit est que le verrouillage du circuit de commande d'horloge 121 est un verrouillage matériel.

Encore un autre avantage des modes de réalisation décrits est que le déclenchement du verrouillage et du déverrouillage des circuits périphériques 111 est automatique.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, le circuit de surveillance 112 est configuré pour prélever, en plus des adresses envoyées par le processeur 107, d'autres adresses transitant sur le bus d'adressage 301 telles que des adresses envoyées par le circuit d'accès à la mémoire 109. Le type du bit 129 peut aussi varier, par exemple le bit 129 est un bit programmable plusieurs fois ou programmable une seule fois, ou encore être un bit de type fusible. De plus l'une ou plusieurs adresses 128 ou 131 peuvent être mémorisées dans le circuit de surveillance 119 sous forme d'une ou plusieurs plages d'adresses.

Enfin, la mise en œuvre pratique des modes de réalisation et variantes décrits est à la portée de la personne du métier à partir des indications fonctionnelles données ci-dessus.

## Revendications

1. Procédé comprenant :
- la détection, par un circuit de surveillance (119), lors de l'exécution par un processeur (107) d'un code (113, 115) stocké à des adresses de stockage dans une mémoire (101, 103) d'un dispositif (100), d'une adresse (125, 127) de lecture dans la mémoire correspondant à une parmi les adresses de stockage, la détection étant faite par l'intermédiaire d'un bus (105, 301) relié à la mémoire ;
- la comparaison, par le circuit de surveillance, de l'adresse avec une ou plusieurs premières adresses (128) ;
- si l'adresse est comprise dans l'une ou plusieurs premières adresses, la commande, par le circuit de surveillance (119), d'un circuit de commande d'horloge (121) pour empêcher l'activation d'un ou plusieurs circuits périphériques (111).

2. Procédé selon la revendication 1, comprenant en outre, avant la détection par le circuit de surveillance (119) :
- la récupération, par le processeur (107), des instructions du code (113, 115) stocké aux adresses de stockage dans la mémoire (101, 103) du dispositif (100).

3. Procédé selon la revendication 1 ou 2, dans lequel la commande comprend le verrouillage d'une configuration courante du circuit de commande d'horloge (121), cette configuration courante imposant un état de désactivation à un ou plusieurs des circuits périphériques (111).

4. Procédé selon l'une quelconque des revendications 1 à 3, dans lequel la commande comprend la désactivation d'au moins un des circuits périphériques (111).

5. Procédé selon l'une quelconque des revendications 1 à 4, dans lequel le circuit de commande d'horloge (121) est configuré pour désactiver et/ou activer des signaux d'horloges (CLK-P) du ou des circuits périphériques (111) du dispositif (100) afin d'effectuer la désactivation et/ou l'activation du ou des périphériques, les signaux d'horloge étant générés par un circuit de génération d'horloge (123).

6. Procédé selon l'une quelconque des revendications 1 à 5, dans lequel, si l'adresse (125, 127) fait partie de l'une ou plusieurs premières adresses (128), le circuit de surveillance (119) bascule l'état d'un bit (129) du circuit de commande d'horloge (121) vers un premier état entraînant le verrouillage du circuit de commande d'horloge (121).

7. Procédé selon la revendication 6, dans lequel, lorsque le circuit de commande d'horloge (121) est verrouillé, des signaux d'horloge (CLK-P) générés par le circuit de génération d'horloge (123) ne peuvent plus être modifiés par le circuit de commande.

8. Procédé selon la revendication 6 ou 7, dans lequel le bit (129) du circuit de commande d'horloge (121) est un bit de type programmable une seule fois.

9. Procédé selon l'une quelconque des revendications 6 à 8, comprenant en outre la comparaison de l'adresse (125, 127) avec une ou plusieurs deuxièmes adresses (131), dans lequel, si l'adresse fait partie de l'une ou plusieurs deuxièmes adresses, le circuit de surveillance (119) bascule l'état du bit (129) du circuit de commande d'horloge (121) vers un deuxième état entraînant le déverrouillage du circuit de commande d'horloge (121).

10. Procédé selon la revendication 9, dans lequel, lorsque le circuit de commande d'horloge (121) est déverrouillé, des signaux d'horloge (CLK-P) générés par le circuit de génération d'horloge (123) ne peuvent plus être modifiés par le circuit de commande.

11. Procédé selon la revendication 9 ou 10, dans lequel, si l'adresse (125, 127) ne fait pas partie de l'une ou plusieurs premières ou deuxièmes adresses, le circuit de surveillance (119) est configuré pour ne pas modifier l'état du bit (129) du circuit de commande d'horloge (121).

12. Procédé selon l'une quelconque des revendications 1 à 11, comprenant en outre, avant la comparaison de l'adresse (125, 127) avec l'une ou plusieurs premières adresses (128), le stockage de l'une ou plusieurs premières adresses dans une mémoire non-volatile (101) du dispositif (100).

13. Procédé selon l'une quelconque des revendications 1 à 12, dans lequel le code (113, 115) est un code de démarrage du processeur (107) du dispositif (100).

14. Procédé selon l'une quelconque des revendications 1 à 13, dans lequel, l'une ou plusieurs premières adresses (128) forment une ou plusieurs plages d'adresses, chaque plage d'adresses étant définie par une adresse de seuil inférieure et une adresse de seuil supérieure et dans lequel le circuit de commande d'horloge (121) est configuré pour permettre l'activation d'un ou plusieurs circuits périphériques parmi les un ou plusieurs circuits périphériques lorsque l'adresse de seuil supérieure a été lue.

15. Procédé selon la revendication 1, dans lequel l'une ou plusieurs premières adresses (128) définissent un contexte dans lequel le processeur (107) est en train de fonctionner.

16. Dispositif (100) comprenant un circuit de surveillance (119) configuré pour détecter, lors de l'exécution par un processeur (107) d'un code (113, 115) stocké à des adresses de stockage dans une mémoire (101, 103) du dispositif, une adresse (125, 127) de lecture dans la mémoire correspondant à l'une parmi les adresses de stockage, la détection s'effectuant par l'intermédiaire d'un bus (105, 301) relié à la mémoire, le circuit de surveillance étant en outre configuré pour comparer l'adresse avec une ou plusieurs premières adresses (128) et, lorsque l'adresse fait partie de l'une ou plusieurs première adresses, pour commander un circuit de commande d'horloge (121) afin d'empêcher l'activation d'un ou plusieurs circuits périphériques (111).

17. Dispositif selon la revendication 16, dans lequel le circuit de commande d'horloge (121) est configuré pour désactiver et/ou activer des signaux d'horloges (CLK-P) du ou des circuits périphériques (111) du dispositif (100) afin d'effectuer la désactivation et/ou l'activation du ou des périphériques, les signaux d'horloge étant générés par un circuit de génération d'horloge (123).
